# EUROPÄISCHE PATENTSCHRIFT

(11) **EP 3 899 781 B1**
(45) Veröffentlichungstag und Bekanntmachung des Hinweises auf die Patenterteilung: **16.08.2023**
(21) Anmeldenummer: 19824301.6
(22) Anmeldetag: 17.12.2019
(51) Int. Cl.: G06V 20/10

(54) **VERFAHREN ZUM ZUSAMMENSTELLEN EINER BAUTEILSAMMLUNG SOWIE ENTSPRECHENDE ANLAGE**
METHOD FOR ASSEMBLING A COLLECTION OF COMPONENTS AND SYSTEM
PROCÉDÉ D'ASSEMBLAGE D'UN ENSEMBLE DE COMPOSANTS AINSI QU'INSTALLATION CORRESPONDANT

(30) Priorität: 19.12.2018 EP 18214264
(43) Veröffentlichungstag der Anmeldung: 27.10.2021
(73) Patentinhaber: Fairchild Fasteners Europe - VSD GmbH, 31135 Hildesheim (DE)
(72) Erfinder: BERLINECKE, Birte, 31139 Hildesheim (DE); DOHMEYER, Jan, 30989 Gehrden (DE); RÖSING, Jürgen, 31319 Sehnde (DE); TIMPE, Torsten, 31137 Hildesheim (DE)
(74) Vertreter: LS-MP von Puttkamer Berngruber Loth Spuhler
(86) Internationale Anmeldenummer: PCT/EP2019/085516
(87) Internationale Veröffentlichungsnummer: WO 2020/127175

(56) Entgegenhaltungen:
- US-B2- 8 180 174
- TAKAHASHI TORU ET AL: "Mass-produced parts traceability system based on automated scanning of "Fingerprint of Things"", 2017 FIFTEENTH IAPR INTERNATIONAL CONFERENCE ON MACHINE VISION APPLICATIONS (MVA), MVA ORGANIZATION, 8. Mai 2017 (2017-05-08), Seiten 202-206, XP033126609, DOI: 10.23919/MVA.2017.7986836

## Beschreibung

Die vorliegende Erfindung betrifft allgemein eine Anlage und ein Verfahren zum Zusammenstellen von Bauteilsammlungen. Insbesondere betrifft die Erfindung eine Anlage und ein Verfahren zum Zusammenstellen von anwenderspezifischen Bauteilsammlungen von bei der Montage in der Luft- und der Raumfahrt oder in der Automobilindustrie oder in anderen Industrien verwendeten Bauteilen.

Gemäß Ausführungsformen der Erfindung betrifft diese beispielsweise die Bauteilversorgung eines Bestückungsautomaten, wie beispielsweise eines Bestückungsroboters, oder die Bauteilversorgung eines Handarbeitsplatzes, bei welchem Bauteile manuell verbaut werden.

Die Erfindung betrifft ein Verfahren zum Zusammenstellen einer Bauteilsammlung, wobei eine Kollektion mehrerer Bauteile in einer Verpackungseinheit zusammengestellt wird.

Die Erfindung betrifft das Bereitstellen von Bauteile-Trays, die insbesondere bei der Montage in der Luft- und der Raumfahrt oder in der Automobilindustrie oder in anderen Industrien Anwendung finden. Bei den hierbei in der Regel zum Einsatz kommenden Trays handelt es sich um Tabletts mit entsprechenden Vertiefungen, in denen die Bauteile gesteckt werden. Dabei ist es üblich, dass von einem Tray Bauteile unterschiedlicher Art aufgenommen werden, insbesondere wenn bei der anschließenden Montage verschiedene Bauteile benötigt werden. In der Regel werden dabei die Bauteile typenspezifisch in bestimmten Bereichen des Trays in das Tray eingesetzt.

Zur Erstbefüllung eines Trays werden die Bauteile aus definierten Produktionslosen genommen und in die für die Bauteile vorgesehene Aufnahmen in dem Tray eingesetzt. Das derart präparierte Tray wird dann dem Bestückungsautomaten oder dem manuellen Bestückungsplatz zugeführt. Dabei werden die einzelnen Bauteile aus dem Tray genommen und somit im Laufe der Montage wird das Tray teilweise oder vollständig geleert.

Anschließend wird das Tray in einer Bauteilversorgungsstation wieder entsprechend mit Bauteilen bestückt. Dabei sollte die Wiederbefüllung des Trays aus ebenfalls definierten Produktionslosen erfolgen. Die Bauteilversorgungsstation befindet sich in der Regel bei dem Bauteil-Zulieferer, während die Montage, d.h. die Entnahme der Bauteile aus dem Tray bei dem Abnehmer des Zulieferers erfolgt.

Die bei der Bauteilversorgungsstation bzw. dem Bauteil-Zulieferer bislang in der Regel angewandte Verfahren zum Präparieren von anschließend bei der Montage in der Luft- und der Raumfahrt oder in der Automobilindustrie oder in anderen Industrien verwendeten Trays weist der Nachteil auf, dass von Seiten des Zulieferers nicht mit Sicherheit feststellbar ist, dass - wenn bei der Montage nicht alle Bauteile dem Tray entnommen werden - die in dem Tray verbleibenden Bauteile an die richtigen Stellen in dem Tray zurückgesteckt wurden. Insbesondere ist es problematisch, dass bei dem herkömmlichen Verfahren zum Präparieren von Trays eine Chargennachverfolgbarkeit praktisch nicht umsetzbar ist.

Gleiches gilt im übertragenen Sinn auch für das Zusammenstellen von anwenderspezifischen Bauteilsammlungen von bei der Montage in der Luft- und der Raumfahrt oder in der Automobilindustrie oder in anderen Industrien verwendeten Bauteilen.

Die Veröffentlichung mit dem Titel "Mass-produced Parts Traceability System Based on Automated Scanning of Fingerprint of Things" vom NEC Corporation, 2017, Fifteenth IAPR International Conference on Machine Vision Application, offenbart ein Verfahren/System zum Zusammenstellen einer Bauteilsammlung, wobei eine Kollektion mehrerer Bauteile in einem Tray zusammengestellt wird, wobei den einzelnen Bauteilen der Bauteilsammlung jeweils ein die Rückverfolgung des entsprechenden Bauteils ermöglichender Identifikator zugeordnet ist, wobei zum Zusammenstellen der Bauteilsammlung ein bereitgestellter Tray mit Bauteilen bestückt wird, wobei den Bauteilen, mit denen das Tray bestückt ist, jeweils ein die Rückverfolgung des entsprechenden Bauteils (2) ermöglichender Identifikator zugeordnet ist, wobei zur Zuordnung des Identifikators eine Oberflächen-Mikrostruktur des entsprechenden Bauteils als Unterscheidungsmerkmal verwendet wird, wobei auf Basis der für jedes Bauteil individuellen Oberflächen-Mikrostruktur eine charakteristische Bitfolge generiert wird, welche dem Identifikator oder zumindest einen Teil des Identifikators bildet oder, welcher den Identifikator zugeordnet wird, und wobei an einer vorab festgelegten oder festlegbaren definierten Bauteilposition die Oberflächen-Mikrostruktur hochauflösend aufgenommen wird.

Auf Grundlage dieser Problemstellung liegt der vorliegenden Erfindung die Aufgabe zugrunde, eine Anlage und ein optimiertes Verfahren zum Zusammenstellen einer Bauteilsammlung, insbesondere einer anwenderspezifischen Bauteilsammlung von bei der Montage in der Luft- und der Raumfahrt oder in der Automobilindustrie oder in anderen Industrien verwendeten Bauteilen anzugeben, wobei eine zuverlässige Identifizierung und Authentifizierung der einzelnen Bauteile der Bauteilsammlung gegeben ist.

Eine weitere Aufgabe der Erfindung ist es, eine Anlage und ein optimiertes Verfahren zum Präparieren von bei der Montage in der Luft- und der Raumfahrt oder in der Automobilindustrie oder in anderen Industrien verwendeten Trays sowie eine entsprechende Anlage bereitzustellen, wobei eine zuverlässige Identifizierung und Authentifizierung der einzelnen Bauteile, mit denen ein bereitgestellter Tray bestückt wird, gegeben ist.

Im Hinblick auf die Anlage wird diese Aufgabe erfindungsgemäß durch den Gegenstand des unabhängigen Patentanspruchs 1 und im Hinblick auf das Verfahren durch den Gegenstand des nebengeordneten Patentanspruchs 2 gelöst, wobei vorteilhafte Weiterbildungen in den entsprechenden abhängigen Ansprüchen angegeben sind.

Demnach betrifft ein Aspekt der Erfindung ein Verfahren zum Zusammenstellen einer Bauteilsammlung, insbesondere einer anwenderspezifischen Bauteilsammlung von bei der Montage in der Luft- und der Raumfahrt oder in der Automobilindustrie oder in anderen Industrien verwendeten Bauteilen, wobei eine Kollektion mehrerer Bauteile in einer Verpackungseinheit oder in einem Tray zusammengestellt wird, und wobei den einzelnen Bauteilen der Bauteilsammlung jeweils ein die Rückverfolgung des entsprechenden Bauteils ermöglichender Identifikator zugeordnet ist.

Gemäß Ausführungsformen der Erfindung betrifft diese insbesondere ein Verfahren zum Präparieren von bei der Montage in der Luft- und der Raumfahrt oder in der Automobilindustrie oder in anderen Industrien verwendeten Trays, wobei ein bereitgestellter Tray mit Bauteilen bestückt wird, und wobei den Bauteilen, mit denen das Tray bestückt ist, jeweils ein die Rückverfolgung des entsprechenden Bauteils ermöglichender Identifikator zugeordnet wird.

Durch das Zuordnen eines entsprechenden Identifikators zu den einzelnen Bauteilen der Bauteilsammlung ist eine einwandfreie Rückverfolgung der Bauteile für das Qualitätsmanagement erzielbar. Insbesondere können auch zu einem späteren Zeitpunkt ähnliche Bauteile, die aus unterschiedlichen Fertigungsprozessen stammen, einwandfrei unterschieden werden. Darüber hinaus ist es möglich, das Produktionslos, aus welchem die Bauteile, mit denen beispielsweise ein Tray bestückt ist/wurde, insbesondere für Garantiezwecke nachzuweisen. Zusätzlich hierzu ist es möglich, OEM-Teile und nicht autorisierte Kopien zu identifizieren.

Neben der Identifikation eines Bauteils als solches kann auch die Identifikation einer Fertigungscharge erfolgen.

Zum Zuordnen eines entsprechenden Identifikators zu den Bauteilen kommen verschiedene Methoden in Frage. Beispielsweise ist es denkbar, die Bauteile mit einer Leuchtstoffmarkierung zu versehen, wie es in der Druckschrift WO 2011/101001 A1 vorgeschlagen wird.

Alternativ hierzu ist es vorgesehen, jedem Bauteil ein Transaktionswasserzeichen zuzuordnen. Unter einem Transaktionswasserzeichnen versteht man im Allgemeinen ein transparentes, nicht wahrnehmbares Muster, welches in ein Datenmaterial (hier: das zu identifizierende Bauteil) mit einem Einbettungsalgorithmus unter Verwendung eines geheimen Schlüssels eingebracht wird.

Ferner ist es insbesondere bei hochpreisigen Bauteilen/Komponenten bekannt, RFID-Etiketten, Datamatrix-Codes oder auch chemische Marker zur Identifizierung einzusetzen.

Diese bisher verwendeten Ansätze zur Identifizierung von Bauteilen oder Komponenten eignen sich jedoch nicht bei Massenbauteilen, insbesondere Schrauben oder Bolzen, obgleich hier auch eine lückenlose Rückverfolgbarkeit der Produktionshistorie sinnvoll ist. Wenn nämlich die Bauteile erst einmal verbaut wurden, kann auch nur eine wenige Cent teure Schraube die Funktionsfähigkeit und Langlebigkeit eines komplexen und teuren Endproduktes beeinträchtigen. Für kleine, preissensitive Bauteile, wie beispielsweise Schrauben oder Bolzen für die Luft- und Raumfahrtindustrie oder für die Automobilindustrie, sind Etiketten oder spezielle Markierungen oftmals zu teuer oder technisch nicht realisierbar.

Von daher gestaltet es sich insbesondere in stark vernetzter Produktionsketten und globaler Zulieferketten schwierig, einzelne Bauteile, insbesondere kleine, preissensitive Bauteile, komplexer Produkte zurückzuverfolgen.

Unter Berücksichtigung dieser Problematik ist gemäß einem Aspekt der vorliegen den Erfindung vorgesehen, dass zur Zuordnung des Identifikators als Unterscheidungsmerkmal eine Oberflächen-Mikrostruktur des entsprechenden Bauteils verwendet wird. Dieser Ansatz ermöglicht eine individuelle Wiedererkennung (Authentifizierung) der Bauteile in einem bereitgestellten Tray, der mit entsprechenden Bauteilen bestückt ist. Auch kann damit jedes bei der Montage wieder in das Tray zurückgesteckte Bauteil anschließend eindeutig identifiziert und ggf. aussortiert oder in dem Tray umgesteckt werden.

Die Technologie basiert darauf, dass die entsprechenden Bauteile eine mikroskopisch individuell ausgeprägte Oberflächenstruktur oder Farbtextur besitzen. Ein definierter Bereich des Bauteils wird ausgewählt und jeweils mit einer Kamera hochaufgelöst aufgenommen. Aus der Bildaufnahme mit ihren spezifischen Strukturen und deren Position wird eine numerische Kennung errechnet und einem Identifikator zugeordnet. Diese Paarung wird in einer Datenbank hinterlegt, vorzugsweise zusammen mit weiteren Daten, wie beispielsweise Mess- oder Herstellungsdaten. Zur späteren Identifizierung wird der gesamte Vorgang wiederholt, und ein Datenabgleich liefert den Identifikator und optional weitere individuelle Merkmale des Bauteils zurück.

Insbesondere eignen sich für diese Art der stochastische "Fingerabdruck" Bauteile aus Metall, wobei sich die einzelnen Bauteile auch bei Losgrößen von mehreren 100.000 Stück im Sekundentakt eindeutig identifizieren lassen, was somit eine Zuordnung von bauteilbezogenen Daten im Produktionstakt ermöglicht.

Da keine zusätzlichen Marker oder IDs am Produkt angebracht werden, ist dieses System fälschungssicher. Dass keine Stückzahl abhängigen Kosten anfallen, macht das System insbesondere auch für Massenbauteile ökonomisch sinnvoll realisierbar.

Bei dem erfindungsgemäßen Verfahren erfolgt die Zuordnung des Identifikators entweder nachdem das Tray mit dem entsprechenden Bauteil bestückt wurde, oder bevor das Tray mit dem entsprechenden Bauteil bestückt wird, und insbesondere während oder im Anschluss an die Fertigung des Bauteils.

In diesem Zusammenhang ist es denkbar, dass vor dem Bestücken des bereitgestellten Trays dieser vollständig geleert ist. Alternativ hierzu ist das erfindungsgemäße Verfahren auch bei Situationen anwendbar, bei denen vor dem Bestücken des bereitgestellten Trays dieser noch teileweise mit Bauteilen einer früheren Bestückung bestückt ist, wobei zur Zuordnung des Identifikators eine Oberflächen-Mikrostruktur des entsprechenden Bauteils als Unterscheidungsmerkmal verwendet wird.

Zur Montage eines Bauteils, mit dem das Tray bestückt ist, wird das entsprechende Bauteil dem Tray entnommen, wobei zur Rückverfolgung des dem Tray entnommenen Bauteils ein definierter Bereich des Bauteils ausgewählt und hochauflösend aufgenommen wird. Aus der Bildaufnahme mit der spezifischen Oberflächen-Mikrostruktur und deren Position wird eine numerische Kennung errechnet und einem Bauteile-Identifikator zugeordnet.

Bei den hierin berücksichtigen Bauteilen handelt es sich insbesondere um Verbindungselemente aus Metall, insbesondere Titan, Aluminium, Stahl, Nickel und entsprechende Legierungen hiervon, wobei diese Verbindungselemente insbesondere in der Luft- und Raumfahrt und/oder Automobilindustrie genutzt werden.

Die vorliegende Erfindung betrifft ferner eine Anlage zum Zusammenstellen einer Bauteilsammlung, insbesondere einer anwenderspezifischen Bauteilsammlung von bei der Montage in der Luft- und der Raumfahrt oder in der Automobilindustrie oder in anderen Industrien verwendeten Bauteilen gemäß dem nebengeordneten Patentanspruch 1.

Diese Anlage eignet sich insbesondere auch zum Präparieren von beispielsweise bei der Montage in der Luft- und Raumfahrt oder in der Automobilindustrie verwendeten Trays, wobei die Anlage eine Bauteilversorgungsstation aufweist, in welcher vorzugsweise automatisiert oder manuell die einzelnen bei der Montage benötigten Trays mit entsprechenden Bauteilen bestückt werden.

Bei der Montageseite kommt beispielsweise ein Bestückungsautomat, wie beispielsweise ein Bestückungsroboter zum Einsatz, welcher die Bauteile aus dem Tray nimmt und entsprechend verbaut. Optional ist es aber auch denkbar, dass bei der Montageseite die Bauteile manuell dem Tray entnommen und montiert werden (Handarbeitsplatz).

Der Bauteilversorgungsstation der erfindungsgemäßen Anlage ist ein System zum eindeutigen Identifizieren und Rückverfolgen der Bauteile in die Trays aufgenommenen oder in die Trays aufzunehmenden Bauteil zugeordnet.

Zur Rückverfolgung eines dem Tray entnommenen Bauteils oder zur Rückverfolgung eines dem Tray entnommenen und dann wieder ggf. in das Tray zurückgesteckten Bauteils wird ein definierter Bereich des Bauteils ausgewählt und hochauflösend aufgenommen. Aus der Bildaufnahme mit der spezifischen Oberflächen-Mikrostruktur des Bauteils und deren Position wird eine numerische Kennung errechnet und einem Bauteile-Identifikator zugeordnet, wobei ein Datenabgleich in einer Datenbank, in welcher für jedes Bauteil die errechnete Kennung und der zugeordnete Bauteile-Identifikator als Paarung hinterlegt wurde, den Bauteile-Identifikator und vorzugsweise weitere individuelle Merkmale des Bauteils zurückliefert.

Nachfolgend wird die Erfindung unter Bezugnahme auf die beiliegende Zeichnung einer exemplarischen Ausführungsform der Anlage zum Präparieren von entsprechenden Trays näher beschrieben.

Es zeigt:

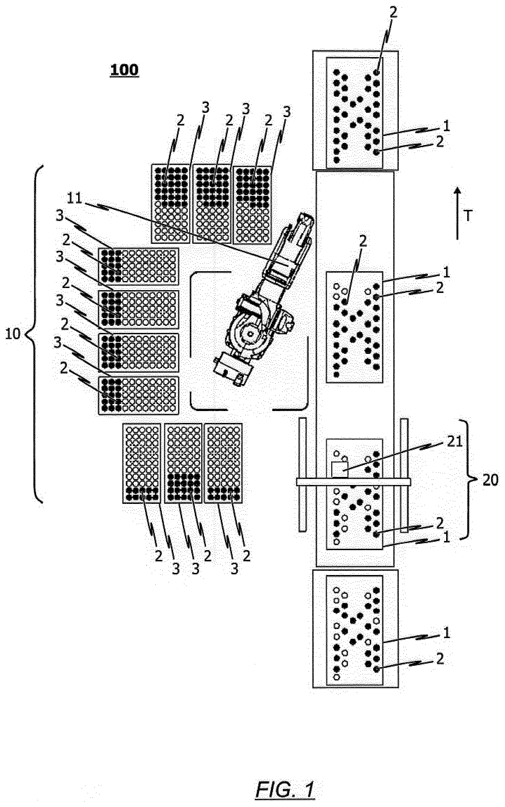

- FIG. 1: schematisch eine exemplarische Ausführungsform der erfindungsgemäßen Anlage zum Präparieren von bei der Montage in der Luft- und Raumfahrt oder in der Automobilindustrie verwendeten Trays.

Der erfindungsgemäßen Lösung liegt die Problemstellung zugrunde, dass die Qualität komplexer Industrieprodukte insbesondere von der Qualität jedes einzelnen Bauteils abhängt. Ein einziges fehlerhaftes Bauteil, wie beispielsweise ein Verbindungselement (Schraube, Bolzen, etc.), kann die Funktionsfähigkeit und Langlebigkeit einer komplexen Struktur beeinträchtigen. Versagt das montierte (fehlerhafte) Bauteil beim Funktionstest, wird in der Regel das Gesamtprodukt mit sämtlichen verbauten Halbzeugen aussortiert. Dies führt zu hohen Kosten, wobei gleichzeitig in der Regel nicht nachvollziehbar ist, wo der Fehler, der zum Versagen des Bauteils beim Funktionstest geführt hat, lag.

Von daher liefert die vorliegende Erfindung eine Lösung, mit welcher auch noch kleine Bauteile und Halbzeuge mit einer Signatur versehen werden können, um es in der Wertschöpfungskette möglichst bis an den Anfang zurückverfolgen zu können. Nur so lassen sich mit Hilfe von Inline-Prüfsystemen Ursachen für wiederkehrende Produktionsfehler erkennen und nachhaltig beheben.

Die erfindungsgemäße Anlage 100, wie sie schematisch in FIG. 1 in Gestalt einer exemplarischen Ausführungsform gezeigt ist, ist eine Anlage 100 zum Präparieren von insbesondere bei der Montage in der Luft- und Raumfahrt oder in der Automobilindustrie verwendeten Trays 1. Diese Anlage 100 weist - wie in FIG. 1 schematisch angedeutet - eine Bauteilversorgungsstation 10 mit einem Bestückungsroboter 11 auf, mit welchem automatisiert die der Bauteilversorgungsstation 10 zugeführten Trays 1 mit entsprechenden Bauteilen 2 aus unterschiedlichen Produktionslosen 3 bestückt werden. Alternativ oder zusätzlich hierzu ist es aber auch denkbar, einen Handarbeitsplatz vorzusehen, um die Trays 1 manuell mit Bauteilen 2 zu bestücken.

Die erfindungsgemäße Anlage 100 zeichnet sich erfindungsgemäß dadurch aus, dass die Trays 1 mit unterschiedlichen Bauteilen 2 (hier: Verbindungselementen) bestückt werden. Zu diesem Zweck greift der Bestückungsroboter 11 auf unterschiedliche definierte Produktionslose 3 zu, um aus diesen Produktionslosen 3 die individuellen Bauteile 2 zu entnehmen und diese an bestimmte Positionen (Vertiefungen) in den Tray 1 einzusetzen.

Die der Bauteilversorgungsstation 10 zugeführten Trays 1 können vollständig geleert sein. Denkbar ist es aber auch, dass - wie in FIG. 1 angedeutet - die dem Bestückungsroboter 11 zugeführten Trays 1 vor dem Bestücken noch teilweise mit Bauteilen 2 einer früheren Bestückung bestückt sind.

Die erfindungsgemäße Anlage 100 weist, wie in FIG. 1 schematisch angedeutet - ein System 20 zum eindeutigen Identifizieren, Authentifizieren und/oder Rückverfolgen der von dem Bestückungsroboter 11 in die Trays 1 gesetzten und/oder von dem Bestückungsroboter 11 in die Trays 1 zu setzenden Bauteile 2 auf.

Alternativ oder zusätzlich hierzu kommt ein System 20 zum eindeutigen Identifizieren, Authentifizieren und/oder Rückverfolgen der noch im Tray 1 befindlichen Bauteile 2 einer früheren Bestückung zum Einsatz.

Denkbar ist es in diesem Zusammenhang, diese Systeme miteinander zu kombinieren, so dass mit einem einzigen System 20 die beiden Aufgaben erfüllt werden können.

Das System 20 zum eindeutigen Identifizieren, Authentifizieren und/oder Rückverfolgen der in die Trays 1 gesetzten oder mit dem Bestückungsroboter 11 in die Trays 1 zu setzenden Bauteile 2 weist erfindungsgemäß eine hochauflösende Kamera 21 auf, mit Hilfe welcher definierte Bereiche der Bauteiloberfläche eines jeden zu identifizierenden und/oder zu authentifizierenden Bauteils 2 aufgenommen werden. Die hochauflösende Kamera 21 ist längs der Transportrichtung T der Trays 1 verfahrbar, so dass alle in ein Tray 1 gesetzte Bauteile 2 zur Identifizierung und/oder Authentifizierung entsprechend abgescannt werden können.

Aus der Bildaufnahme mit ihrer spezifischen Strukturverläufen und deren Position zueinander wird in einer Auswerteeinrichtung eine numerische Kennung errechnet und in einer Datenbank hinterlegt.

Zur späteren Identifizierung wird der gesamte Vorgang wiederholt. Stimmen die Kennungen überein, so handelt es sich um das gesuchte Bauteil 2. Das System 20 ist so ausgelegt, dass eine große Bandbreite an Materialien - von glatten Kunststoffen über präzessionsbearbeitetes Aluminium, Eisenguss bis hin zu lackierten Oberfläche - mit ein und derselben Hardware im Produktionstakt erfasst werden kann.

Erfindungsgemäß ist sichergestellt, dass jedes Bauteil 2 in dem von dem Bestückungsroboter 11 bestückten Tray 1 zur Rückverfolgbarkeit entsprechend eindeutig identifiziert ist. Auf diese Weise ist jedes von dem Bestückungsroboter 11 neu gestecktes Bauteil 2 bekannt. Bei der Montage umgesteckte Bauteile 2 werden ebenfalls erkannt und können ausgetauscht oder gegebenenfalls akzeptiert werden.

Die Erfindung ist nicht auf die Merkmale der exemplarischen Ausführungsform gemäß FIG. 1 beschränkt, sondern ergibt sich aus den beigefügten Ansprüchen.

## Patentansprüche

1. Anlage (100) zum Zusammenstellen einer Bauteilsammlung, insbesondere einer anwenderspezifischen Bauteilsammlung von bei der Montage in der Luft- und der Raumfahrt oder in der Automobilindustrie oder in anderen Industrien verwendeten Bauteilen (2), wobei die Anlage (100) folgendes aufweist:
- eine Bauteilversorgungsstation (10) mit Bauteile-Trays (1) mit entsprechenden Bauteilen (2) aus unterschiedlichen Produktionslosen (3) und mit einem Bestückungsroboter (11) zum automatisierten Zusammenstellen einer Kollektion mehrerer Bauteile (2) in einer Verpackungseinheit oder in einem Kollektion-Tray (1), und
- ein System (20) zum eindeutigen Identifizieren, Authentifizieren und/oder Rückverfolgen der Bauteile (2),
wobei das System (20) zum eindeutigen Identifizieren, Authentifizieren und/oder Rückverfolgen der Bauteile (2) folgendes aufweist:
- eine Kamera (21), welche ausgebildet ist, zur Rückverfolgung eines Bauteils (2) einen definierten Bereich des Bauteils (2) auszuwählen und hochauflösend aufzunehmen, und
- eine Auswerteeinrichtung, welche ausgebildet ist, aus der Bildaufnahme mit der spezifischen Oberflächen-Mikrostruktur des Bauteils (2) und deren Position eine nummerische Kennung zu errechnen und eine Bauteile-ID zuzuordnen, und wobei die Auswerteeinrichtung ferner ausgebildet ist, über einen Datenabgleich in einer Datenbank, in welcher für jedes Bauteil (2) die errechnete Kennung und zugeordnete Bauteile-ID als Paarung hinterlegt wurde, die Bauteile-ID und vorzugsweise weitere individuelle Merkmale des Bauteils (2) zurückzuliefern.

2. Verfahren zum Zusammenstellen einer Bauteilsammlung, insbesondere einer anwenderspezifischen Bauteilsammlung von bei der Montage in der Luft- und der Raumfahrt oder in der Automobilindustrie oder in anderen Industrien verwendeten Bauteilen (2), in einer Anlage (100) nach Anspruch 1, wobei eine Kollektion mehrerer Bauteile (2) in einer Verpackungseinheit oder in einem Tray (1) zusammengestellt wird, und wobei den einzelnen Bauteilen der Bauteilsammlung jeweils ein die Rückverfolgung des entsprechenden Bauteils (2) ermöglichender Identifikator zugeordnet ist, wobei zum Zusammenstellen der Bauteilsammlung ein bereitgestellter Tray (1) mit Bauteilen (2) bestückt wird, und wobei den Bauteilen (2), mit denen das Tray (1) bestückt ist, jeweils ein die Rückverfolgung des entsprechenden Bauteils (2) ermöglichender Identifikator zugeordnet ist.

3. Verfahren nach Anspruch 2,
wobei die Zuordnung des Identifikators erfolgt, nachdem die Verpackungseinheit oder das Tray (1) mit dem entsprechenden Bauteil (2) bestückt wurde.

4. Verfahren nach Anspruch 2 oder 3,
wobei vor dem Zusammenstellen der Kollektion in der Verpackungseinheit oder in dem Tray (1) diese bzw. dieser vollständig geleert ist; oder
wobei vor dem Zusammenstellen der Kollektion in der Verpackungseinheit oder in dem Tray (1) diese bzw. dieser noch teilweise Bauteile (2) einer früher zusammengestellten Kollektion aufweist, und wobei jedem Bauteil (2) der früheren Kollektion ein entsprechender Identifikator zugeordnet ist.

5. Verfahren nach Anspruch 4,
wobei zur Identifizierung eines Bauteils (2) einer früheren Kollektion an einer vorab festgelegten oder festlegbaren Bauteilposition eine Oberflächen-Mikrostruktur hochauflösend aufgenommen und auf Basis der aufgenommenen Oberflächen-Mikrostruktur eine charakteristische Bitfolge generiert wird, über welche der Identifikator des Bauteils (2) ermittelt wird.

6. Verfahren nach einem der Ansprüche 2 bis 5,
wobei jeder Bauteile-ID weitere Informationen zugeordnet werden, insbesondere im Laufe der Bauteilfertigung oder nach Bauteilfertigung gewonnene Daten, insbesondere technische Spezifikationsdaten.

7. Verfahren nach einem der Ansprüche 2 bis 6,
wobei zur Montage eines Bauteils (2) der in der Verpackungseinheit oder in dem Tray (1) zusammengestellten Kollektion, dieses der Verpackungseinheit bzw. dem Tray (1) entnommen wird, und wobei zur Rückverfolgung des der Verpackungseinheit bzw. dem Tray (1) entnommenen Bauteils (2) ein definierter Bereich des Bauteils (2) ausgewählt und hochauflösend aufgenommen wird, wobei aus der Bildaufnahme mit der spezifischen Oberflächen-Mikrostruktur und deren Position eine nummerische Kennung errechnet und einer Bauteile-ID zugeordnet wird.

8. Verfahren nach Anspruch 7,
wobei für jedes Bauteil (2) die errechnete Kennung und zugeordnete Bauteile-ID als Paarung in einer Datenbank hinterlegt wird, vorzugsweise zusammen mit weiteren Daten, insbesondere Mess- und/oder Herstellungsdaten.

9. Verfahren nach Anspruch 7 oder 8,
wobei zur Rückverfolgung des der Verpackungseinheit bzw. dem Tray (1) entnommenen Bauteils (2) ein Datenabgleich in einer Datenbank, in welcher für jedes Bauteil (2) die errechnete Kennung und zugeordnete Bauteile-ID als Paarung hinterlegt wurde, die Bauteile-ID und vorzugsweise weitere individuellen Merkmale des Bauteils (2) zurückliefert.

10. Verfahren nach einem der Ansprüche 2 bis 9,
wobei das Bauteil (2) ein Verbindungselement aus Metall ist, insbesondere Titan, Aluminium, Stahl, Nickel und/oder eine Legierung hiervon, welches in der Luft- und Raumfahrt und/oder Automobilindustrie genutzt wird.

## Claims

1. A system (100) for assembling a component collection, in particular a user-specific component collection of components (2) used in assembly in the aerospace or automotive industry or in other industries, the system (100) comprising:
- a component supply station (10) with component trays (1) with corresponding components (2) from different production lots (3) and with an assembly robot (11) for automated assembly of a collection of several components (2) in a packaging unit or in a collection tray (1), and
- a system (20) for uniquely identifying, authenticating and/or tracing the components (2),
wherein the system (20) for uniquely identifying, authenticating and/or tracking the components (2) comprises:
- a camera (21) which is designed to select a defined area of the component (2) for tracing the component (2) and to record it in high resolution, and
- an evaluation device which is designed to calculate a numerical identifier based on the image recording with the specific surface micro structure of the component (2) and its position and to assign a component ID, and wherein the evaluation device is further designed to return the component ID and preferably further individual features of the component (2) by means of a data comparison in a database in which the calculated identifier and assigned component ID have been stored as a pair for each component (2).

2. Method for assembling a component collection, in particular a user-specific component collection of components (2) used in assembly in the aerospace industry or in the automotive industry or in other industries, in a plant (100) according to claim 1, wherein a collection of several components (2) is assembled in a packaging unit or in a tray (1), and wherein the individual components of the component collection are each assigned an identifier enabling the corresponding component (2) to be traced, wherein a provided tray (1) is equipped with components (2) for assembling the component collection, and wherein the components (2) with which the tray (1) is equipped are each assigned an identifier enabling the corresponding component (2) to be traced.

3. method according to claim 2,
wherein the identifier being assigned after the packaging unit or tray (1) has been loaded with the corresponding component (2).

4. method according to claim 2 or 3,
wherein prior to assembling the collection in the packaging unit or tray (1), it is completely emptied; or
where before assembling the collection in the packaging unit or in the tray (1), it comprises components (2) of a previously assembled collection, and wherein each component (2) of the previous collection is assigned a corresponding identifier.

5. Method according to claim 4,
wherein, in order to identify a component (2) of a previous collection at a predetermined or definable component position, a surface micro structure is recorded in high resolution and, on the basis of the recorded surface micro structure, a characteristic bit sequence is generated via which the identifier of the component (2) is determined.

6. Method according to any one of claims 2 to 5,
wherein each component ID is assigned further information, in particular data obtained during component manufacturing or after component manufacturing, in particular technical specification data.

7. Method according to any one of claims 2 to 6,
wherein, for the assembly of a component (2) of the collection assembled in the packaging unit or in the tray (1), the latter is removed from the packaging unit or the tray (1), and wherein, for tracing the component (2) removed from the packaging unit or the tray (1), a defined region of the component (2) is selected and photographed in high resolution, wherein a numerical identification is calculated from the image recording with the specific surface micro structure and its position and is assigned to a component ID.

8. Method according to claim 7,
wherein for each component (2) the calculated identifier and associated component ID is stored as a pairing in a database, preferably together with further data, in particular measurement and/or manufacturing data.

9. Method according to claim 7 or 8,
wherein, for tracing the component (2) removed from the packaging unit or tray (1), a data comparison in a database, in which the calculated identification and associated component ID have been stored as a pairing for each component (2), returns the component ID and preferably further individual features of the component (2).

10. Method according to any one of claims 2 to 9,
wherein the component (2) is a connecting element made of metal, in particular titanium, aluminum, steel, nickel and/or an alloy thereof, which is used in the aerospace and/or automotive industry.

## Revendications

1. Installation (100) pour rassembler une collection de composants, en particulier une collection de composants spécifique à l'utilisateur de composants (2) utilisés lors du montage dans l'industrie aéronautique et aérospatiale ou dans l'industrie automobile ou dans d'autres industries, l'installation (100) comprenant ce qui suit :
- une station d'approvisionnement en composants (10) qui comporte des plateaux à composants (1), contenant des composants correspondants (2) provenant de différents lots de production (3), et un robot de placement (11) pour rassembler de manière automatisée une collection de plusieurs composants (2) dans une unité d'emballage ou dans un plateau de collection (1), et
- un système (20) d'identification, d'authentification et/ou de traçabilité univoque les composants (2),
le système (20) d'identification, d'authentification et/ou de traçabilité univoque des composants (2) comprenant ce qui suit :
- une caméra (21) qui, en vue de la traçabilité du composant (2), est conçue pour sélectionner et enregistrer en haute résolution une zone définie d'un composant (2), et
- un dispositif d'évaluation qui est conçu pour calculer, à partir de l'enregistrement d'image présentant la microstructure de surface spécifique du composant (2) et sa position, un identifiant numérique et pour lui attribuer un ID de composant, le dispositif d'évaluation étant en outre conçu pour fournir en retour l'ID de composant et de préférence d'autres caractéristiques individuelles du composant (2) par l'intermédiaire d'une comparaison de données dans une base de données dans laquelle l'identifiant calculé et l'ID de composant (2) attribué ont été stockés sous forme d'appariement pour chaque composant (2).

2. Procédé pour rassembler une collection de composants, en particulier une collection de composants spécifique à l'utilisateur de composants (2) utilisés lors du montage dans l'industrie aéronautique et aérospatiale ou dans l'industrie automobile ou dans d'autres industries, dans une installation (100) selon la revendication 1,
dans lequel une collection de plusieurs composants (2) est rassemblée dans une unité d'emballage ou dans un plateau (1), et
un identificateur respectif permettant la traçabilité du composant (2) correspondant est attribué aux composants individuels de la collection de composants,
pour rassembler la collection de composants, un plateau (1) mis à disposition est équipé de composants (2), et un identificateur respectif permettant la traçabilité du composant (2) correspondant est attribué aux composants (2) dont le plateau (1) est équipé.

3. Procédé selon la revendication 2,
dans lequel l'attribution de l'identificateur s'effectue après que l'unité d'emballage ou le plateau (1) a été équipé(e) du composant (2) correspondant.

4. Procédé selon la revendication 2 ou 3,
dans lequel, avant de rassembler la collection dans l'unité d'emballage ou dans le plateau (1), celle-ci/celui-ci est complètement vidé(e) ; ou
avant de rassembler la collection dans l'unité d'emballage ou dans le plateau (1), celle-ci/celui-ci comprend encore partiellement des composants (2) d'une collection rassemblée antérieurement, et un identificateur correspondant est attribué à chaque composant (2) de la collection antérieure.

5. Procédé selon la revendication 4,
dans lequel, pour identifier un composant (2) d'une collection antérieure, une microstructure de surface est enregistrée en haute résolution à une position du composant définie ou définissable au préalable et, en se basant sur la microstructure de surface enregistrée, une séquence de bits caractéristique est générée, par laquelle l'identificateur du composant (2) est déterminé.

6. Procédé selon l'une des revendications 2 à 5,
dans lequel d'autres informations, en particulier des données obtenues au cours de la fabrication des composants ou après la fabrication des composants, en particulier des données de spécification technique, sont attribuées à chaque ID de composant.

7. Procédé selon l'une des revendications 2 à 6,
dans lequel, pour le montage d'un composant (2) de la collection rassemblée dans l'unité d'emballage ou dans le plateau (1), ledit composant est prélevé de l'unité d'emballage ou du plateau (1), et en vue de la traçabilité du composant (2) prélevé de l'unité d'emballage ou du plateau (1), une zone définie du composant (2) est sélectionnée et enregistrée en haute résolution,
un identifiant numérique est calculé à partir de l'enregistrement d'image présentant la microstructure de surface spécifique et sa position, et est attribué à un ID de composant.

8. Procédé selon la revendication 7,
dans lequel, pour chaque composant (2), l'identifiant calculé et l'ID de composant attribué sont stockés sous forme d'appariement dans une base de données, de préférence conjointement avec d'autres données, en particulier des données de mesure et/ou de fabrication.

9. Procédé selon la revendication 7 ou 8,
dans lequel, en vue de la traçabilité du composant (2) prélevé de l'unité d'emballage ou du plateau (1), une comparaison de données dans une base de données, dans laquelle l'identifiant calculé et l'ID de composant attribué ont été stockés sous forme d'appariement pour chaque composant (2), fournit en retour l'ID de composant et de préférence d'autres caractéristiques individuelles du composant (2).

10. Procédé selon l'une des revendications 1 à 9,
dans lequel le composant (2) est un élément de liaison en métal, en particulier en titane, en aluminium, en acier, en nickel et/ou en un alliage de ceux-ci, qui est utilisé dans l'industrie aéronautique et aérospatiale et/ou dans l'industrie automobile.
